# EUROPEAN PATENT APPLICATION

(11) **EP 2 380 805 A1**
(43) Date of publication of application: **26.10.2011**
(21) Application number: 11163529.8
(22) Date of filing: 21.04.2011
(51) Int. Cl.: B62M 1/04, B62M 1/02

(54) **Bicycle With Bidirectional Input and One-Way Output Transmission Combined With Crank Hole Thereof**

(30) Priority: 21.04.2010 US 764162; 16.02.2011 US 28276
(71) Applicant: Yang, Tai-Her, Si-Hu Town, Dzan-Hwa (TW)
(72) Inventor: Yang, Tai-Her, Si-Hu Town, Dzan-Hwa (TW)
(74) Representative: Wright, Howard Hugh Burnby

(57) **Abstract**

For the bicycle with bidirectional input and one-way output transmission combined with crank hole thereof of the present invention, the input shaft used for bidirectionally drive of the transmission with bidirectional input and one-way output is installed through and combined with the pedal crank hole of the bicycle frame.

## Description

### BACKGROUND OF THE INVENTION

### (a) Field Of The Invention

For the bicycle with bidirectional input and one-way output transmission combined with crank hole thereof of the present invention, the input shaft used for bidirectional drive of the transmission with bidirectional input and one-way output is installed through and combined with the pedal crank hole of the bicycle frame to forward or reversely drive the input terminal of the human input device in two rotary directions through human feet, then the output terminal of the human input device transmits the kinetic energy to the input terminal of the transmission with bidirectional input and one-way output, and then through the output terminal of the transmission with bidirectional input and one-way output to produce constant rotary direction output to drive the load wheel group;

The present invention is applied to pedal vehicle, or mixture of electric and pedal vehicles, or combination of electric and pedal vehicles, especially to a bicycle capable of being pedaled bidirectionally and driven to move in unidirectional.

### (b) Description Of The PriorArt

The rider on the conventional bicycle always pedals at constant direction, and the related muscles and joints are constantly used during the pedaling period, i.e. some muscles and joints of the rider's body are constantly used and stressed, and the others are constantly unused and released, overall, the human load is uneven, the rider is easily fatigued, and exercise injury is caused by frequently pedaling.

### SUMMARY OF THE INVENTION

The bicycle with bidirectional input and one-way output transmission combined with crank hole thereof of the present invention is a human input device with dual rotary direction input, in which the output terminal thereof connects to the input terminal of a transmission with bidirectional input and one-way output, the constant rotary direction output through the output terminal of the transmission with bidirectional input and one-way output to drive a load wheel group, and it is characterized in that the input shaft used for bidirectionally drive of the transmission with bidirectional input and one-way output is installed through and combined with the pedal crank hole of the bicycle frame, therefore for the rider making choices of the driving input direction, and producing constant rotary direction output with same or different speed ratio at different driven input direction to drive the load wheel group.

### BRIEF DESCRIPTION OF THE DRAWINGS

Fig. 1 is a schematic view showing the basic component blocks of the bicycle with bidirectional input and one-way output transmission combined with crank hole thereof, according to the present invention.
Fig. 2 is a schematic view showing the driving device component blocks, in which a front transmission 12 is additionally installed between a human input device 11 and a transmission with bidirectional input and one-way output 13 in Fig. 1.
Fig. 3 is a schematic view showing the driving device component blocks, in which a rear transmission 14 is additionally installed between the transmission with bidirectional input and one-way output 13 and a load wheel group 15 in Fig. 1.
Fig. 4 is a schematic view showing the driving device component blocks, in which the front transmission 12 is additionally installed between the human input device 11 and the transmission with bidirectional input and one-way output 13, and the rear transmission 14 is additionally installed between the transmission with bidirectional input and one-way output 13 and the load wheel group 15 in Fig. 1.
Fig. 5 is a structural schematic view showing the first embodiment of the transmission with bidirectional input and one-way output 13 combined with the crank hole thereof, according to the present invention.
Fig. 6 is a structural schematic view showing the second embodiment of the transmission with bidirectional input and one-way output 13 combined with the crank hole thereof, according to the present invention.
Fig. 7 is a structural schematic view showing the third embodiment of the transmission with bidirectional input and one-way output 13 combined with the crank hole thereof, according to the present invention.
Fig. 8 is a structural schematic view showing the fourth embodiment of the transmission with bidirectional input and one-way output 13 combined with the crank hole thereof, according to the present invention.
Fig. 9 is a structural schematic view showing the fifth embodiment of the transmission with bidirectional input and one-way output 13 combined with the crank hole thereof, according to the present invention.
Fig. 10 is a structural schematic view showing the sixth embodiment of the transmission with bidirectional input and one-way output 13 combined with the crank hole thereof, according to the present invention.

### DESCRIPTION OF MAIN COMPONENT SYMBOLS

11: Human input device
12: Front transmission
13: Transmission with bidirectional input and one-way output
14: Rear transmission
15: Load wheel group
101, 102, 103, 104: Shaft bearing
200: Planetary wheel support arm ring frame
201: Planetary wheel shaft
202: Sun wheel
203: Planetary wheel
204: Outer wheel
301, 302, 303, 305: One-way transmission
400: Epicyclic gear support arm frame
401: Epicyclic gear shaft
402: Inner bevel wheel
403: Epicyclic gear
404: Outer bevel wheel
500: Shell of gear train
600: Machine body
601: Crank Hole
602, 603, 605, 606, 615, 616, 617: Driving wheel
604, 618: Revolving shaft
607: Driving belt
608: Helix structure within crank hole
609: Cyclic fix screw structure with hole step
2000: Input shaft
3000: Output shaft

### DETAILED DESCRIPTION OF THE PREFERRED EMBODIMENTS

For the bicycle with bidirectional input and one-way output transmission combined with crank hole thereof of the present invention, the input shaft used for bidirectionally drive of the transmission with bidirectional input and one-way output is installed through and combined with the pedal crank hole of the bicycle frame to forward or reversely drive the input terminal of the human input device in two rotary directions through human feet, then the output terminal of the human input device transmits the kinetic energy to the input terminal of the transmission with bidirectional input and one-way output, and then through the output terminal of the transmission with bidirectional input and one-way output to produce constant rotary direction output to drive the load wheel group, and further to drive the vehicle integrated with the load wheel group; the present invention is applied to pedal vehicles, or mixture of electric and pedal vehicles, or combination of electric and pedal vehicles, especially to a bicycle capable of being pedaled bidirectionally and driven to move in unidirectional, for human's lower limbs pedaling bidirectionally to extend and change the muscle groups, thus achieving the following advantages:
(1) reducing the injured caused by some muscles and joints overused; and
(2) employing or training the unused muscles and joints.

The bicycle with bidirectional input and one-way output transmission combined with crank hole thereof of the present invention is a human input device with dual rotary direction input, in which the output terminal thereof connects to the input terminal of a transmission with bidirectional input and one-way output, the constant rotary direction output through the output terminal of the transmission with bidirectional input and one-way output to drive a load wheel group, and it is characterized in that the input shaft used for bidirectionally drive of the transmission with bidirectional input and one-way output is installed through and combined with the pedal crank hole of the bicycle frame, therefore for the rider making choices of the driving input direction, and by means of the transmission with bidirectional input and one-way output to produce constant rotary direction output with same or different speed ratio at different driven input direction to further drive the load wheel group.

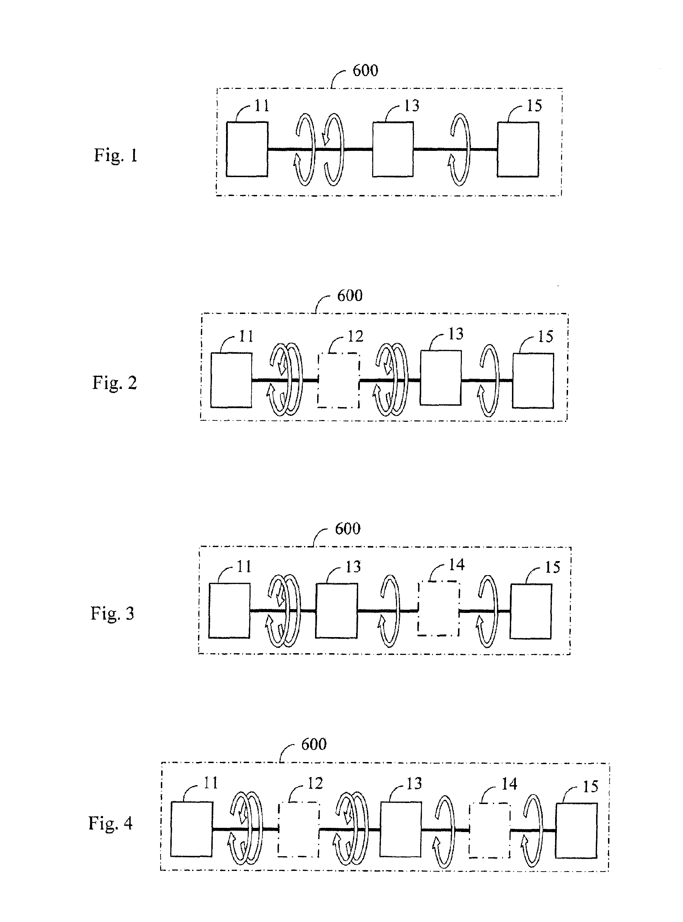

Fig. 1 is a schematic view showing the basic component blocks of the bicycle with bidirectional input and one-way output transmission combined with crank hole thereof, according to the present invention.

As shown in Fig. 1, which is a structural schematic view of the bicycle with bidirectional input and one-way output transmission combined with crank hole thereof, except for the components of the pedal vehicle and a machine body 600, the main components include:
-- human input device 11: constituted by an output mechanism with dual rotary direction, which receives forward or reverse rotary driven input or reciprocating driven input from human's foot to produce forward or reverse rotation, including a pedal, a crank, and a driving wheel set with dual rotary direction, or a handle, a hand shank, and a driving wheel set with dual rotary direction, i.e. dual rotary direction mechanism by human power; in which
-- the kinetic energy of the first driving rotary direction and the input kinetic energy of the second driving rotary direction are derived from human's foot for driving the input terminal of the human input device 11;
the first driving rotary direction and the second driving rotary direction are reverse;
-- transmission with bidirectional input and one-way output 13: which is driven by different rotary direction kinetic energy from the human input device 11, and outputs constant rotary direction kinetic energy; and it is characterized in that the input shaft used for bidirectionally drive of the transmission with bidirectional input and one-way output is installed through and combined with the pedal crank hole of the bicycle frame;
the transmission components within the transmission with bidirectional input and one-way output 13 are constituted by one or more than one kind of the followings, including (1) gear unit; and/or (2) friction wheel group; and/or (3) chain and sprocket section; and/or (4) belt and pulley section; and/or (5) transmission crank and wheels set; and/or (6) fluid transmission unit; and/or (7) electromagnetic force actuator; and in which
when the transmission with bidirectional input and one-way output 13 is driven through being input the first driving rotary direction and the second driving rotary direction, which are different rotary directions, the speed ratio between the input terminal and the output terminal with constant rotary direction is the same, different, or variable; in which the main transmission structure and operational features of the transmission with bidirectional input and one-way output 13 are as following:
the first rotary direction and the second rotary direction are reverse;
if the input terminal is driven by the first rotary direction, the first rotary direction output is produced through the first transmission gear train driving the output terminal;
   -- if the input terminal is driven by the second rotary direction, the first rotary direction output is produced through the second transmission gear train driving the output terminal;
   -- an one-way transmission is installed between the first transmission gear train and the second transmission gear train to avoid the interference from the second transmission gear train when the first transmission gear train is used to be the first rotary direction input and produces the first rotary direction output;
   -- an one-way transmission is installed between the second transmission gear train and the first transmission gear train to avoid the interference from the first transmission gear train when the second transmission gear train is used to be the second rotary direction input and produces the first rotary direction output;
   -- load wheel group 15: it is directly driven by the output terminal of the transmission with bidirectional input and one-way output 13, and further drives a vehicle integrated with the load wheel group 15;

For the bicycle with bidirectional input and one-way output transmission combined with crank hole thereof, if it is driven through the human input device 11 by human's foot at the first driving rotary direction, or at the second rotary direction with different rotary direction from the first driving rotary direction, the rotary kinetic energy output from the output terminal of the human input device 11 is transmitted to the input terminal of the transmission with bidirectional input and one-way output 13 via the additionally installed front transmission 12, and the output terminal of the transmission with bidirectional input and one-way output 13 outputs rotary kinetic energy with constant rotary direction, to drive the load wheel group 15, and to further drive a vehicle integrated with the load wheel group 15.

Fig. 2 is a schematic view showing the driving device component blocks, in which the front transmission 12 is additionally installed between the human input device 11 and the transmission with bidirectional input and one-way output 13 in Fig. 1.

As shown in Fig. 2, for the bicycle with bidirectional input and one-way output, except for the components of the pedal vehicle and a machine body 600, the main components include:
-- human input device 11: constituted by an output mechanism with dual rotary direction, which receives forward or reverse rotary driven input or reciprocating driven input from human's foot to produce forward or reverse rotation, including a pedal, a crank, and a driving wheel set with dual rotary direction, or a handle, a hand shank, and a driving wheel set with dual rotary direction, i.e. dual rotary direction mechanism by human power; in which
-- the kinetic energy of the first driving rotary direction and the input kinetic energy of the second driving rotary direction are derived from human's foot for driving the input terminal of the human input device 11;
the first driving rotary direction and the second driving rotary direction are reverse;
front transmission 12: constituted by one or more of the following transmissions including various rotary transmission functional structures, such as gear type, belt type, or friction-type, with constant speed ratio or variable speed ratio; in which
   the front transmission 12 is driven by the human input device 11 and outputs rotary kinetic energy for driving the transmission with bidirectional input and one-way output 13;
-- transmission with bidirectional input and one-way output 13: which is driven by different rotary direction kinetic energy from the front transmission 12, and outputs constant rotary direction kinetic energy; and it is characterized in that the input shaft used for bidirectionally drive of the transmission with bidirectional input and one-way output is installed through and combined with the pedal crank hole of the bicycle frame;
the transmission components within the transmission with bidirectional input and one-way output 13 are constituted by one or more than one kind of the followings, including (1) gear unit; and/or (2) friction wheel group; and/or (3) chain and sprocket section; and/or (4) belt and pulley section; and/or (5) transmission crank and wheels set; and/or (6) fluid transmission unit; and/or (7) electromagnetic force actuator; and in which
when the transmission with bidirectional input and one-way output 13 is driven through being input the first driving rotary direction and the second driving rotary direction, which are different rotary directions, the speed ratio between the input terminal and the output terminal with constant rotary direction is the same, different, or variable; in which
the main transmission structure and operational features of the transmission with bidirectional input and one-way output 13 are as following:
-- the first rotary direction and the second rotary direction are reverse;
-- if the input terminal is driven by the first rotary direction, the first rotary direction output is produced through the first transmission gear train driving the output terminal;
-- if the input terminal is driven by the second rotary direction, the first rotary direction output is produced through the second transmission gear train driving the output terminal;
-- an one-way transmission is installed between the first transmission gear train and the second transmission gear train to avoid the interference from the second transmission gear train when the first transmission gear train is used to be the first rotary direction input and produces the first rotary direction output;
-- an one-way transmission is installed between the second transmission gear train and the first transmission gear train to avoid the interference from the first transmission gear train when the second transmission gear train is used to be the second rotary direction input and produces the first rotary direction output;
-- load wheel group 15: it is directly driven by the output terminal of the transmission with bidirectional input and one-way output 13, and further drives a vehicle integrated with the load wheel group 15;

For the bicycle with bidirectional input and one-way output transmission combined with crank hole thereof, the rotary kinetic energy output from the output terminal of the human input device 11, which is forward or reversely driven by human's foot, is transmitted to the transmission with bidirectional input and one-way output 13, and the rotary kinetic energy in constant direction output from the output terminal of the transmission with bidirectional input and one-way output 13 is via the additionally installed rear transmission 14 to drive the load wheel group 15, and to further drive a vehicle integrated with the load wheel group 15.

Fig. 3 is a schematic view showing the driving device component blocks, in which a rear transmission 14 is additionally installed between the transmission with bidirectional input and one-way output 13 and a load wheel group 15 in Fig. 1.

As shown in Fig. 3, for the bicycle with bidirectional input and one-way output, except for the components of the pedal vehicle and a machine body 600, the main components include:
-- human input device 11: constituted by an output mechanism with dual rotary direction, which receives forward or reverse rotary driven input or reciprocating driven input from human's foot to produce forward or reverse rotation, including a pedal, a crank, and a driving wheel set with dual rotary direction, or a handle, a hand shank, and a driving wheel set with dual rotary direction, i.e. dual rotary direction mechanism by human power; in which
-- the kinetic energy of the first driving rotary direction and the input kinetic energy of the second driving rotary direction are derived from human's foot for driving the input terminal of the human input device 11;
-- the first driving rotary direction and the second driving rotary direction are reverse;
-- transmission with bidirectional input and one-way output 13: which is driven by different rotary direction kinetic energy from the human input device 11 through the front transmission 12, and outputs constant rotary direction kinetic energy; and it is characterized in that the input shaft used for bidirectionally drive of the transmission with bidirectional input and one-way output is installed through and combined with the pedal crank hole of the bicycle frame;
the transmission components within the transmission with bidirectional input and one-way output 13 are constituted by one or more than one kind of the followings, including (1) gear unit; and/or (2) friction wheel group; and/or (3) chain and sprocket section; and/or (4) belt and pulley section; and/or (5) transmission crank and wheels set; and/or (6) fluid transmission unit; and/or (7) electromagnetic force actuator; and in which
when the transmission with bidirectional input and one-way output 13 is driven through being input the first driving rotary direction and the second driving rotary direction, which are different rotary directions, the speed ratio between the input terminal and the output terminal with constant rotary direction is the same, different, or variable; in which
the main transmission structure and operational features of the transmission with bidirectional input and one-way output 13 are as following:
-- the first rotary direction and the second rotary direction are reverse;
-- if the input terminal is driven by the first rotary direction, the first rotary direction output is produced through the first transmission gear train driving the output terminal;
-- if the input terminal is driven by the second rotary direction, the first rotary direction output is produced through the second transmission gear train driving the output terminal;
-- an one-way transmission is installed between the first transmission gear train and the second transmission gear train to avoid the interference from the second transmission gear train when the first transmission gear train is used to be the first rotary direction input and produces the first rotary direction output;
-- an one-way transmission is installed between the second transmission gear train and the first transmission gear train to avoid the interference from the first transmission gear train when the second transmission gear train is used to be the second rotary direction input and produces the first rotary direction output;
-- rear transmission 14: constituted by one or more than one kind of the following transmissions including various rotary transmission functional structures, such as gear type, belt type, or friction-type, with constant speed ratio or variable speed ratio, for being driven by the transmission with bidirectional input and one-way output 13, whereas its output terminal is used to drive the load wheel group 15; and
-- load wheel group 15: directly driven by the output terminal of the rear transmission 14, and further driving a vehicle integrated with the load wheel group 15; in which
for the bicycle with bidirectional input and one-way output transmission combined with crank hole thereof, it drives the human input device 11 through forward or reverse rotation by human's foot, so as the rotary kinetic energy is output from the output terminal, and is via the additionally installed front transmission 12 transmitted to the input terminal of the transmission with bidirectional input and one-way output 13, and then is output in constant rotary direction from the output terminal of the transmission with bidirectional input and one-way output 13 to drive the load wheel group 15 through the additionally installed rear transmission 14, and to further drive a vehicle integrated with the load wheel group 15.

Fig. 4 is a schematic view showing the driving device component blocks, in which the front transmission 12 is additionally installed between the human input device 11 and the transmission with bidirectional input and one-way output 13, and the rear transmission 14 is additionally installed between the transmission with bidirectional input and one-way output 13 and the load wheel group 15 in Fig. 1.

As shown in Fig. 4, for the bicycle with bidirectional input and one-way output, except for the components of the pedal vehicle and a machine body 600, the main components include:
-- human input device 11: constituted by an output mechanism with dual rotary direction, which receives forward or reverse rotary driven input or reciprocating driven input from human's foot to produce forward or reverse rotation, including a pedal, a crank, and a driving wheel set with dual rotary direction, or a handle, a hand shank, and a driving wheel set with dual rotary direction, i.e. dual rotary direction mechanism by human power; in which
-- the kinetic energy of the first driving rotary direction and the input kinetic energy of the second driving rotary direction are derived from human's foot for driving the input terminal of the human input device 11;
-- the first driving rotary direction and the second driving rotary direction are reverse;
-- front transmission 12: constituted by one or more than one kind of the following transmissions including various rotary transmission functional structures, such as gear type, belt type, or friction-type, with constant speed ratio or variable speed ratio; in which
   the front transmission 12 is driven by the human input device 11 and outputs rotary kinetic energy for driving the transmission with bidirectional input and one-way output 13;
-- transmission with bidirectional input and one-way output 13: which is driven by different rotary direction kinetic energy from the front transmission 12, and outputs constant rotary direction kinetic energy; and it is characterized in that the input shaft used for bidirectionally drive of the transmission with bidirectional input and one-way output is installed through and combined with the pedal crank hole of the bicycle frame;
the transmission components within the transmission with bidirectional input and one-way output 13 are constituted by one or more than one kind of the followings, including (1) gear unit; and/or (2) friction wheel group; and/or (3) chain and sprocket section; and/or (4) belt and pulley section; and/or (5) transmission crank and wheels set; and/or (6) fluid transmission unit; and/or (7) electromagnetic force actuator; and in which
when the transmission with bidirectional input and one-way output 13 is driven through being input the first driving rotary direction and the second driving rotary direction, which are different rotary directions, the speed ratio between the input terminal and the output terminal with constant rotary direction is the same, different, or variable; in which
the main transmission structure and operational features of the transmission with bidirectional input and one-way output 13 are as following:
-- the first rotary direction and the second rotary direction are reverse;
-- if the input terminal is driven by the first rotary direction, the first rotary direction output is produced through the first transmission gear train driving the output terminal;
-- if the input terminal is driven by the second rotary direction, the first rotary direction output is produced through the second transmission gear train driving the output terminal;
-- an one-way transmission is installed between the first transmission gear train and the second transmission gear train to avoid the interference from the second transmission gear train when the first transmission gear train is used to be the first rotary direction input and produces the first rotary direction output;
-- an one-way transmission is installed between the second transmission gear train and the first transmission gear train to avoid the interference from the first transmission gear train when the second transmission gear train is used to be the second rotary direction input and produces the first rotary direction output;
-- rear transmission 14: constituted by one or more than one kind of the following transmissions including various rotary transmission functional structures, such as gear type, belt type, or friction-type, with constant speed ratio or variable speed ratio, for being driven by the transmission with bidirectional input and one-way output 13, whereas its the output terminal is used to drive the load wheel group 15; and
-- load wheel group 15: directly driven by the output terminal of the rear transmission 14, and further driving a vehicle integrated with the load wheel group 15.

For the bicycle with bidirectional input and one-way output transmission combined with crank hole thereof, except for the related components, machine body and the load wheel set of the driven vehicle installed, it is characterized by capable of performing two-way input and one-way output, and the components and operational features of the transmission with bidirectional input and one-way output 13 are provided for describing the feasibility.

The installed transmission with bidirectional input and one-way output 13 in the bicycle with bidirectional input and one-way output transmission combined with crank hole thereof, whose operational features are as following:
-- the first rotary direction and the second rotary direction are reverse;
-- if the input terminal is driven by the first rotary direction, the first rotary direction output is produced through the first transmission gear train driving the output terminal;
-- if the input terminal is driven by the second rotary direction, the first rotary direction output is produced through the second transmission gear train driving the output terminal;
-- an one-way transmission is installed between the first transmission gear train and the second transmission gear train to avoid the interference from the second transmission gear train when the first transmission gear train is used to be the first rotary direction input and produces the first rotary direction output;
-- an one-way transmission is installed between the second transmission gear train and the first transmission gear train to avoid the interference from the first transmission gear train when the second transmission gear train is used to be the second rotary direction input and produces the first rotary direction output;

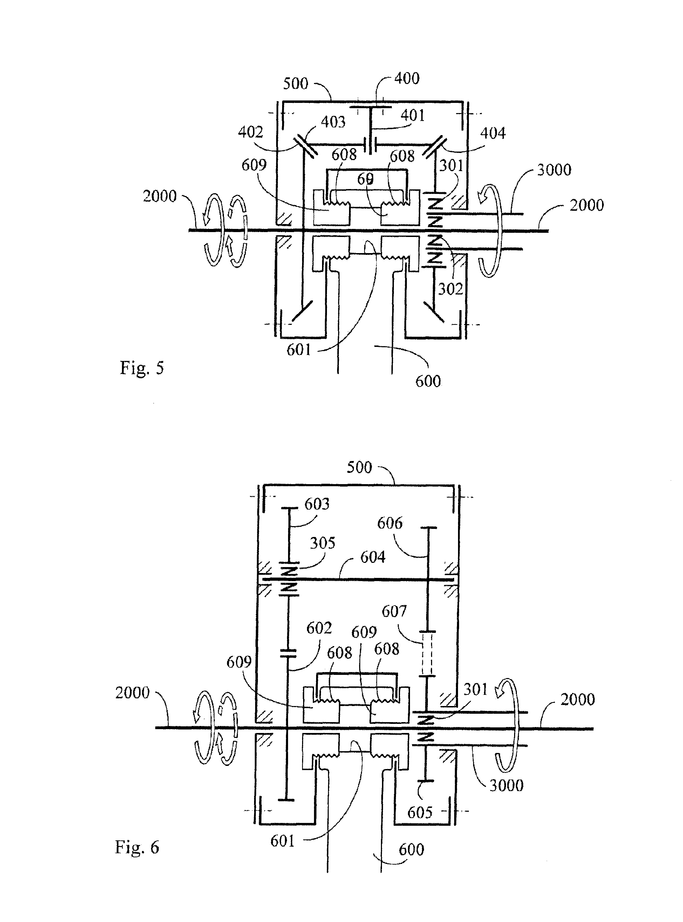

In the bicycle with bidirectional input and one-way output transmission combined with crank hole thereof, the embodiments of the transmission with bidirectional input and one-way output 13 combined with crank hole thereof used are shown as Figs. 5 to 9, including:
A) as shown in Fig. 5, which is constituted by an epicyclic gear train combined with crank hole thereof; and
B) as shown in Figs. 6 to 9, which is integrated constituted by a transmission with different transmission rotary direction combined with crank hole thereof.

Fig. 5 is a structural schematic view showing the first embodiment of the transmission with bidirectional input and one-way output 13 combined with the crank hole thereof, according to the present invention.

As shown in Fig. 5, the transmission with bidirectional input and one-way output 13 in Figs. 1 to 4 is constituted by an epicyclic gear train, in which the input shaft and output shaft are coaxially fitting, and the main components include:
-- one end of the input shaft 2000 of the transmission with bidirectional input and one-way output 13 is through installed at one outside of the shell of the gear train 500 in concave structure via a bearing structure, then via two concave inner shells of the concave structure, and from the other end of the input shaft 2000 to perforate through the output shaft 3000 via the one-way transmission 302, and a bearing is installed between the output shaft 3000 and the other outside of the shell of gear train 500;
-- shell of gear train 500: related to a concave structure, which is installed to constitute the mechanical part of the gear train with bidirectional input and one-way output, and through the cyclic fix screw structure with hole step 609 to be locked in the helix structure within crank hole 608 of the crank hole 601, which is embedded in the indentation space of the concave structure;
-- machine body 600: a relatively static mechanism structure;
- input shaft 2000 is integrated at the inner bevel wheel 402;
-- an epicyclic gear 403 is installed between the outer bevel wheel 404 and the inner bevel wheel 402; the center of the epicyclic gear 403 rotates at an epicyclic gear shaft 401; one end of the epicyclic gear shaft 401 is integrated at an epicyclic gear support arm frame 400, and the epicyclic gear support arm frame 400 is fixed at the shell of gear train 500;
-- the shell of gear train 500 is by means of the cyclic fix screw structure with hole step 609 installed within the helix structure within crank hole 608 of the crank hole 601 of the machine body 600;
-- the one-way transmission 301 is installed between the outer bevel wheel 404 and the output shaft 3000;
-- the inner bevel wheel 402, the epicyclic gear 403, and the outer bevel wheel 404 are constituted by gears or friction wheels;
-- the relation of the transmission ratio for the inner bevel wheel 402 to drive the epicyclic gear 403 is acceleration, deceleration, or constant velocity;
-- the relation of the transmission ratio for the epicyclic gear 403 to drive the outer bevel wheel 404 is acceleration, deceleration, or constant velocity;
-- by way of the above structure, the input shaft 2000 is driven at the first rotary direction, and is through the one-way transmission 302 for driving the output shaft 3000 to produce the first rotary direction output, therefore to constitute the first transmission gear train;
-- by way of the above structure, the input shaft 2000 is driven at the second rotary direction, through the inner bevel wheel 402 for further driving the epicyclic gear 403 and the outer bevel wheel 404, and through the outer bevel wheel 404 and the one-way transmission 301 for driving the output shaft 3000 to produce the first rotary direction output, therefore to constitute the second transmission gear train; and

Fig. 6 is a structural schematic view showing the second embodiment of the transmission with bidirectional input and one-way output 13 combined with the crank hole thereof, according to the present invention;

As shown in Fig. 6, the transmission with bidirectional input and one-way output 13 in Figs. 1 to 4 is integrated and constituted by a transmission with different transmission rotary directions, in which the input shaft and output shaft are coaxially fitting, and the main components include:
-- one end of the input shaft 2000 of the transmission with bidirectional input and one-way output 13 is through installed at one outside of the shell of the gear train 500 in concave structure via a bearing structure, then via two concave inner shells of the concave structure, and from the other end of the input shaft 2000 to perforate through the output shaft 3000 via the one-way transmission 301, and a bearing is installed between the output shaft 3000 and the other outside of the shell of gear train 500;
-- shell of gear train 500: related to a concave structure, which is installed to constitute the mechanical part of the gear train with bidirectional input and one-way output, and through the cyclic fix screw structure with hole step 609 to be locked in the helix structure within crank hole 608 of the crank hole 601, which is embedded in the indentation space of the concave structure;
-- machine body 600: a relatively static mechanism structure;
-- the other end of the input shaft 2000 is integrated with the driving wheel 602;
-- the driving wheel 602 and the driving wheel 603 rotates in different directions, the driving wheel 603 is via the one-way transmission 305 and then is common with the driving wheel 606 integrated at the revolving shaft 604, and a bearing is installed between the revolving shaft 604 and the shell of gear train 500;
-- the driving wheel 606 and the driving wheel 605 are by means of the pulley or sprocket, driven by the driving belt 607, to constitute a driving wheel set with the same rotary direction;
   -- the driving wheel 605 is integrated with the output shaft 3000;
   -- the shell of the gear train 500 is by means of the cyclic fix screw structure with hole step 609 installed within the helix structure within the crank hole 608 of the crank hole 601 of the machine body 600;
   -- the driving wheels 602, 603 are constituted by gears, or friction wheels;
   -- the relation of the transmission ratio in the driving wheel set with different rotary directions is acceleration, deceleration, or constant velocity;
   -- the relation of the transmission ratio in the driving wheel set with same rotary direction is acceleration, deceleration, or constant velocity;
   -- the driving wheel set with same rotary direction is constituted by the pulley with driving belt, toothed belt or steel belt, or the sprocket with chain;
   -- by way of the above structure, the input shaft 2000 is driven at the first rotary direction, and is through the one-way transmission 301 for driving the output shaft 3000 to produce the first rotary direction output, therefore to constitute the first transmission gear train; and
   -- by way of the above structure, the input shaft 2000 is driven at the second rotary direction to drive the driving wheel 602, then the driving wheel 602 drives the driving wheel 603, then the driving wheel 603 drives the driving wheel 604 via the one-way transmission 305 to drive the driving wheel 606, and then the driving wheel 606 drives the driving wheel 605 for driving the output shaft 3000 to produce the first rotary direction output, therefore to constitute the second transmission gear train.

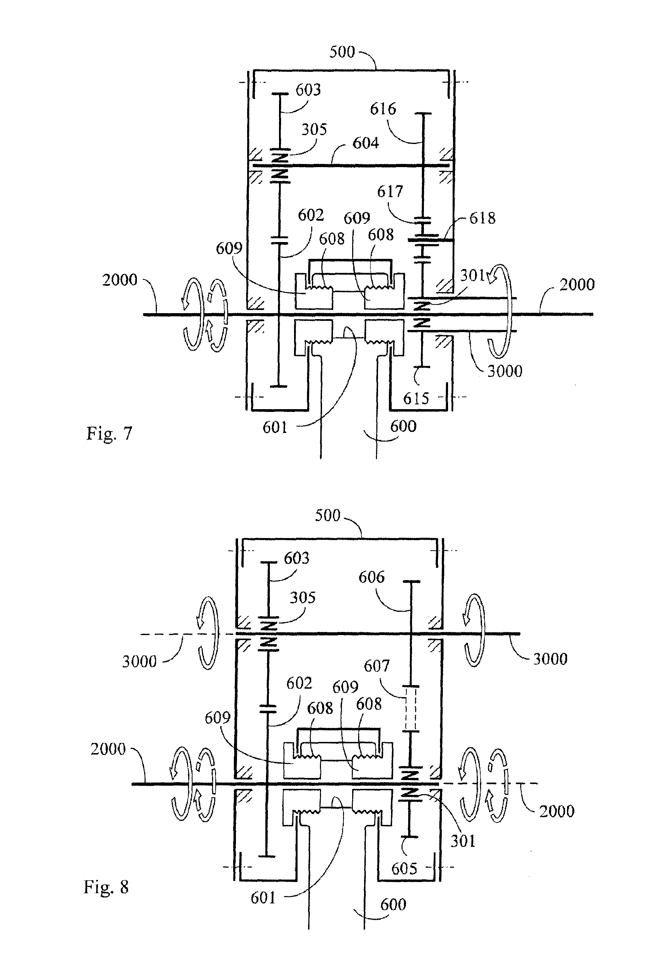

Fig. 7 is a structural schematic view showing the third embodiment of the transmission with bidirectional input and one-way output 13 combined with the crank hole thereof, according to the present invention.

As shown in Fig.7, the transmission with bidirectional input and one-way output 13 in Figs. 1 to 4 is integrated and constituted by a transmission with different rotary directions, in which the input shaft and output shaft are coaxially fitting, and the main components include:
-- one end of the input shaft 2000 of the transmission with bidirectional input and one-way output 13 is through installed at one outside of the shell of the gear train 500 in concave structure via a bearing structure, then via two concave inner shells of the concave structure, and from the other end of the input shaft 2000 to perforate through the output shaft 3000 via the one-way transmission 301, and a bearing is installed between the output shaft 3000 and the other outside of the shell of gear train 500;
-- shell of gear train 500: related to a concave structure, which is installed to constitute the mechanical part of the gear train with bidirectional input and one-way output, and through the cyclic fix screw structure with hole step 609 to be locked in the helix structure within crank hole 608 of the crank hole 601, which is embedded in the indentation space of the concave structure;
   -- machine body 600: a relatively static mechanism structure;
   --the input shaft 2000 is integrated with the driving wheel 602;
   -- the driving wheel 602 and the driving wheel 603 rotates in different directions, the driving wheel 603 is via the one-way transmission 305 and then is common with the driving wheel 616 integrated at the revolving shaft 604, and a bearing is installed between the revolving shaft 604 and the shell of gear train 500;
   -- the driving wheel 616 drives the driving wheel 615 via the driving wheel 617 rotating at the revolving shaft 618 to constitute a driving wheel set with same rotary direction;
   -- the revolving shaft 618 is integrated at the shell of gear train 500;
   -- the driving wheel 615 is integrated with the output shaft 3000;
   -- the shell of the gear train 500 is by means of the cyclic fix screw structure with hole step 609 installed within the helix structure within crank hole 608 of the crank hole 601 of the machine body 600;
   -- the driving wheels 602, 603, 615, 616, and 617 are constituted by gears, or friction wheels;
   -- the relation of the transmission ratio in the driving wheel set with different rotary directions is acceleration, deceleration, or constant velocity;
   -- the relation of the transmission ratio in the driving wheel set with same rotary direction is acceleration, deceleration, or constant velocity;
   -- the driving wheel set with same rotary direction is constituted by the gear set containing the idle gear or by the internal gear set;
   -- by way of the above structure, the input shaft 2000 is driven at the first rotary direction, and is through the one-way transmission 301 for driving the output shaft 3000 to produce the first rotary direction output, therefore to constitute the first transmission gear train;
   -- by way of the above structure, the input shaft 2000 is driven at the second rotary direction to drive the driving wheel 602, then the driving wheel 602 drives the driving wheel 603, then the driving wheel 603 drives the driving wheel 604 via the one-way transmission 305 to drive the driving wheel 616, then the driving wheel 616 via the driving wheel 617 drives the driving wheel 615, and then the driving wheel 615 drives the output shaft 3000 to produce the first rotary direction output to constitute the second transmission gear train.

Fig. 8 is a structural schematic view showing the fourth embodiment of the transmission with bidirectional input and one-way output 13 combined with the crank hole thereof, according to the present invention.

As shown in Fig.8, the transmission with bidirectional input and one-way output 13 in Figs. 1 to 4 is integrated and constituted by a transmission with different rotary directions, in which the input shaft and output shaft are installed in different axis, and the main components include:
-- one end of the input shaft 2000 of the transmission with bidirectional input and one-way output 13 is through installed at one outside of the shell of gear train 500 in concave structure via a bearing structure, then via two concave inner shells of the concave structure, and from the other end of the input shaft 2000 to perforate through the driving wheel 605 via the one-way transmission 301, a bearing is installed between the other end of the input shaft 2000 and the other outside of the shell of gear train 500, and the rotary power source is inputted through one or two ends of the input shaft 2000;
-- shell of gear train 500: related to a concave structure, which is installed to constitute the mechanical part of the gear train with bidirectional input and one-way output, and through the cyclic fix screw structure with hole step 609 to be locked in the helix structure within crank hole 608 of the crank hole 601, which is embedded in the indentation space of the concave structure;

-- machine body 600: a relatively static mechanism structure;
--the input shaft 2000 is integrated with the driving wheel 602;
-- the driving wheel 602 and the driving wheel 603 rotates in different directions, the driving wheel 603 is via the one-way transmission 305 to integrate at the output shaft 3000, the driving wheel 606 is integrated at the output shaft 3000, and a bearing is installed between the output shaft 3000 and the shell of gear train 500;
-- the driving wheel 605 and the driving wheel 606 are by means of the pulley or sprocket, driven by the driving belt 607, to constitute a driving wheel group with same rotary direction; the driving wheel 606 is integrated with the output shaft 3000;
-- the shell of the gear train 500 is by means of the cyclic fix screw structure with hole step 609 installed within the helix structure within crank hole 608 of the crank hole 601 of the machine body 600;
-- the driving wheels 602, 603 are constituted by gears, or friction wheels;
-- the relation of the transmission ratio in the driving wheel set with different rotary directions is acceleration, deceleration, or constant velocity;
-- the relation of the transmission ratio in the driving wheel set with same rotary direction is acceleration, deceleration, or constant velocity;
-- the driving wheel set with same rotary direction is constituted by the pulley with driving belt, toothed belt or steel belt, or by the sprocket with chain;
-- by way of the above structure, the input shaft 2000 is driven at the first rotary direction, and is through the one-way transmission 301 for driving the driving wheel 605, through the driving wheel 607 for driving the driving wheel 606 to further drive the output shaft 3000 to produce the first rotary direction output, therefore to constitute the first transmission gear train;
-- by way of the above structure, the input shaft 2000 is driven at the second rotary direction to drive the driving wheel 602, then the driving wheel 602 drives the driving wheel 603, and then via the one-way transmission 305 for driving the output shaft 3000 to produce the first rotary direction output, therefore to constitute the second transmission gear train; and
-- one or two ends of the output shaft 3000 are arranged to output.

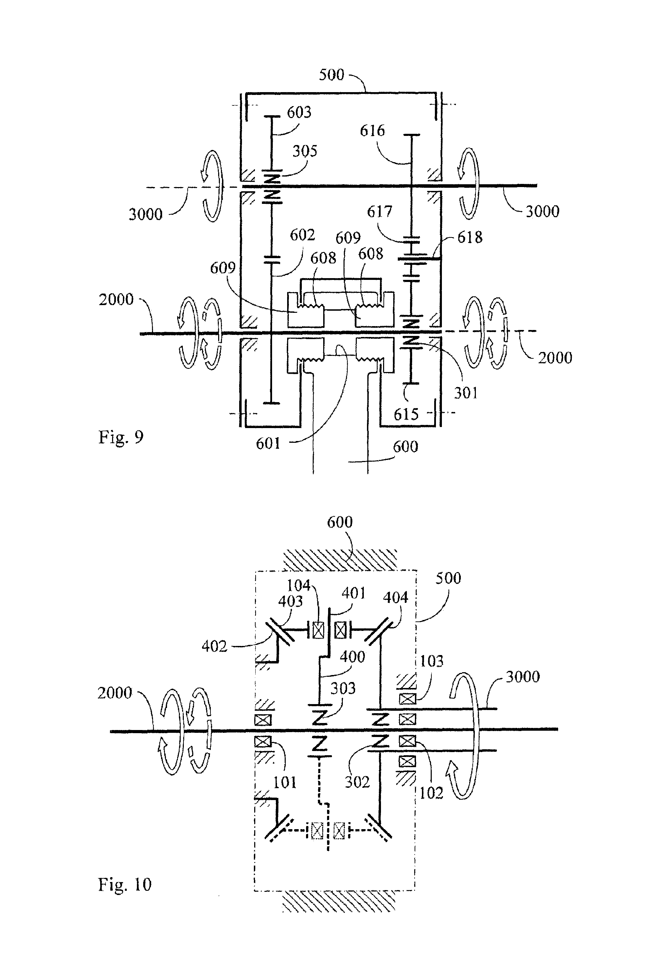

Fig. 9 is a structural schematic view showing the fifth embodiment of the transmission with bidirectional input and one-way output 13 combined with the crank hole thereof, according to the present invention.

As shown in Fig.9, the transmission with bidirectional input and one-way output 13 in Figs. 1 to 4 is integrated and constituted by a transmission with different rotary directions, in which the input shaft and output shaft are installed in different axis, and the main components include:
-- one end of the input shaft 2000 of the transmission with bidirectional input and one-way output 13 is through installed at one outside of the shell of gear train 500 in concave structure via a bearing structure, then via two concave inner shells of the concave structure, and from the other end of the input shaft 2000 to perforate through the driving wheel 615 via the one-way transmission 301, a bearing is installed between the other end of the input shaft 2000 and the other outside of the shell of gear train 500, and the rotary power source is inputted through one or two ends of the input shaft 2000;
-- shell of gear train 500: related to a concave structure, which is installed to constitute the mechanical part of the gear train with bidirectional input and one-way output, and through the cyclic fix screw structure with hole step 609 to be locked in the helix structure within crank hole 608 of the crank hole 601, which is embedded in the indentation space of the concave structure;
-- machine body 600: a relatively static mechanism structure;
-- the input shaft 2000 is integrated with the driving wheel 602,
-- the driving wheel 615 drives the driving wheel 616 via the driving wheel 617, the driving wheel 616 is integrated with the output shaft 3000, and a bearing is installed between the output shaft 3000 and the shell of gear train 500;
-- the driving wheel 617 rotates at the revolving shaft 618, and the revolving shaft 618 is installed at the shell of gear train 500;
-- the driving wheel 602 and the driving wheel 603 rotate in different directions;
-- the driving wheel 603 is integrated with the output shaft 3000 through the one-way transmission 305;
-- the shell of the gear train 500 is by means of the cyclic fix screw structure with hole step 609 installed within the helix structure within crank hole 608 of the crank hole 601 of the machine body 600;
-- the driving wheels 602, 603, 615, 616, and 617 are constituted by gears, or friction wheels;
-- the relation of the transmission ratio in the driving wheel set with different rotary directions is acceleration, deceleration, or constant velocity;
-- the relation of the transmission ratio in the driving wheel set with same rotary direction is acceleration, deceleration, or constant velocity;
-- the driving wheel set with same rotary direction is constituted by the gear set containing the idle gear or by the internal gear set;
-- by way of the above structure, the input shaft 2000 is driven at the first rotary direction, and is through the one-way transmission 301 for driving the driving wheel 615, then through the driving wheel 617 for driving the driving wheel 616 and for further driving the output shaft 3000 to produce the first rotary direction output, therefore to constitute the first transmission gear train;
-- by way of the above structure, the input shaft 2000 is driven at the second rotary direction to drive the driving wheel 602, then the driving wheel 602 drives the driving wheel 603, then the driving wheel 603 through the one-way transmission 305 drives the output shaft 3000 to produce the first rotary direction output, therefore to constitute the second transmission gear train; and
-- one or two ends of the output shaft 3000 are arranged to output.

In the bicycle with bidirectional input and one-way output transmission combined with crank hole thereof, the transmission with bidirectional input and one-way output 13 is further consisted of a bidirectional input one-way output inner rocker arm epicyclic gear set, which is by means of an inner rocker arm epicyclic gear set to combine with the one-way transmission to enable the inner rocker arm epicyclic gear set to constitute the bidirectional input one-way output transmission function;

Fig. 10 is a structural schematic view showing the sixth embodiment of the transmission with bidirectional input and one-way output 13 combined with the crank hole thereof, according to the present invention;

As shown in Fig. 10, the inner rocker arm epicyclic gear set is combined with the one-way transmission, and the input shaft and the output shaft are coaxial sheathing, which mainly consists of:
-- Inner rocker arm epicyclic gear set: consisted of an inner bevel wheel 402, an outer bevel wheel 404 and at least one epicyclic gear 403, and including the bevel gears thereof meshing with each other to form the epicyclic gear set function, or the bevel friction wheel thereof meshing with each other to generate friction transmission to form the epicyclic gear set function, and equipped with a shell 500 to combine with the machine body 600, as well as equipped with the shaft and shaft bearing;

The speed ratios of the inner bevel wheel 402 and the outer bevel wheel 404 of above mentioned epicyclic gear set are the same, and the speed ratios of the two respectively with the epicyclic gear 403 are same or different;

The speed ratios of the inner bevel wheel 402 and the outer bevel wheel 404 of above mentioned epicyclic gear set are different, whereas the speed ratios of the epicyclic gear 403 and the outer bevel wheel 404 are the same or different, and the speed ratios of the epicyclic gear 403 and the inner bevel wheel 402 are same or different;
-- One end of the input shaft 2000 is via the shaft bearing 101 structure penetratingly installed to one side of the shell of the gear train 500, whereas the other end of the input shaft 2000 is via the one-way transmission 302 and the shaft bearing 102 to penetrate the inside of the cylindrical output shaft 3000; a shaft bearing 103 is installed between the cylindrical output shaft 3000 and the shell of gear train 500;
-- Shell of gear train 500: installed to constitute the mechanical part of the bidirectional input one-way output inner rocker arm epicyclic gear set, which is fixed to the machine body 600;
-- Machine body 600: a relatively static mechanism structure;
-- Inner bevel wheel 402 is fixed to the shell 500;
-- An epicyclic gear 403 is installed between the outer bevel wheel 404 and the inner bevel wheel 402; the center of the epicyclic gear 403 rotates on the epicyclic gear shaft 401 through the shaft bearing 104; the epicyclic gear shaft 401 combines to the epicyclic gear support arm frame 400; a one-way transmission 303 is installed between the epicyclic gear support arm frame 400 and the input shaft 2000;
-- The outer bevel wheel 404 is annularly installed to the cylindrical output shaft 3000;

For the above mentioned the bidirectional input one-way output inner rocker arm epicyclic gear set constituting the transmission with bidirectional input and one-way output 13, the operational functions are describes as follow:
-- When the human input device 11 uses the first rotary direction to drive the input shaft 2000, the one-way transmission 302 drives the cylindrical output shaft 3000 to perform first rotary output to form the first transmission gear; in the meantime, the input shaft 2000 through the one-way transmission 303 and the epicyclic gear support arm frame 400 is at an idling status;
-- When the human input device 11 uses the second rotary direction to drive the input shaft 2000, the one-way transmission 303 and the epicyclic gear support arm frame 400 drive the epicyclic gear 403 and the outer bevel wheel 404 to drive the cylindrical output shaft 3000 to perform the same output of the first rotary direction to form the second transmission gear; in the meantime, the one-way transmission 302 between the input shaft 2000 and the cylindrical output shaft 3000 is at an idling status;

The operational characteristics are as follow:
-- The first and second rotary directions are opposite rotary directions;
-- When using first rotary direction to drive the input end, the first transmission gear drives the output end to perform first rotary direction output;
-- When using second rotary direction to drive the input end, the second transmission gear drives the output end to perform first rotary direction output;
-- A one-way transmission is installed between the first transmission gear train and the second transmission gear train, so as to avoid the interference from the second transmission gear train when the first transmission gear train is inputted in the first rotary direction and outputs in the first rotary direction;
-- A one-way transmission is installed between the second transmission gear train and the first transmission gear train, so as to avoid the interference from the first transmission gear train when the second transmission gear train is inputted in the second rotary direction and outputs in the first rotary direction;

For the bidirectional input one-way output inner rocker arm epicyclic gear set constituting the transmission with bidirectional input and one-way output 13, the shaft bearings 101, 102, 103 and 104 are composed by any bearing among a ball bearing, cylindrical roller bearing, sleeve bearing, pneumatic bearing, or maglev bearing, or composed by a mixed use upon different shaft bearings.

For the bidirectional input one-way output inner rocker arm epicyclic gear set constituting the transmission with bidirectional input and one-way output 13, the epicyclic gear and the support arm frame set which is constituted by the epicyclic gear 403 and the equipped shaft bearing 104, the epicyclic gear shaft 401 and the epicyclic gear support arm frame 400 thereof can be composed by one or more than one sets;

In the bicycle with bidirectional input and one-way output transmission combined with crank hole thereof, as for the installed position of the one-way transmission in the transmission with bidirectional input and one-way output 13, except for the structural positions exampled in Figs. 5 to 10, the installed position can be selected under the same operational function of one-way input and bidirectional output.

In the bicycle with bidirectional input and one-way output transmission combined with crank hole thereof, as for the combining methods of the transmission with bidirectional input and one-way output 13 and the crank hole 601 of the bicycle, except for the cyclic fix screw structure with hole step 609 and the helix structure within crank hole 608 locked in the crank hole 601, further including fastening through latch structure, and/or combining through key and keyway structure, and/or combining through pin and pin hole, and/or screwing through helical structure, and/or clamping or welding through clamping structure, to install the transmission with bidirectional input and one-way output 13 at the crank hole 601.

According to one aspect of the present invention, a pedal-driven vehicle having a frame, the vehicle comprises:
a bidirectional input device (11) having an input shaft (2000) and an output shaft (3000);
a transmission device (13) having a bidirectional input and a one-way output, the transmission device (13) arranged to be driven by the bidirectional input device (11); and
a load (15) arranged to be driven by the one-way output of the transmission device (13); wherein the input shaft (2000) and the output shaft (3000) of the bidirectional input device (11) are coaxially mounted and are installed through a pedal crank hole (601) of the frame of the vehicle, such the transmission device (13) is locked in the crank hole (601).

## Claims

1. A bicycle with bidirectional input and one-way output transmission combined with crank hole thereof, which is a human input device with dual rotary direction input, in which the output terminal thereof connects to the input terminal of a specific transmission with bidirectional input and one-way output, the constant rotary direction output through the output terminal of the transmission with bidirectional input and one-way output to drive a load wheel group, and it is **characterized in that** the input shaft used for bidirectionally drive of the transmission with bidirectional input and one-way output is installed through and combined with the pedal crank hole of the bicycle frame, therefore for the rider making choices of the driving input direction, and by means of the transmission with bidirectional input and one-way output to produce constant rotary direction output with same or different speed ratio at different driven input direction to further drive the load wheel group, the main components including:
-- human input device (11): constituted by an output mechanism with dual rotary direction, which receives forward or reverse rotary driven input or reciprocating driven input from human's foot to produce forward or reverse rotation, including a pedal, a crank, and a driving wheel set with dual rotary direction, or a handle, a hand shank, and a driving wheel set with dual rotary direction, i.e. dual rotary direction mechanism by human power; in which
-- the kinetic energy of the first driving rotary direction and the input kinetic energy of the second driving rotary direction are derived from human's foot for driving the input terminal of the human input device (11);
-- the first driving rotary direction and the second driving rotary direction are reverse;
-- transmission with bidirectional input and one-way output (13): which is driven by different rotary direction kinetic energy from the human input device (11), and outputs constant rotary direction kinetic energy; and it is **characterized in that** the input shaft used for bidirectionally drive of the transmission with bidirectional input and one-way output is installed through and combined with the pedal crank hole of the bicycle frame;
the transmission components within the transmission with bidirectional input and one-way output (13) are constituted by one or more than one kind of the followings, including 1) gear unit; and/or 2) friction wheel group; and/or 3) chain and sprocket section; and/or 4) belt and pulley section; and/or 5) transmission crank and wheels set; and/or 6) fluid transmission unit; and/or 7) electromagnetic force actuator; and in which
when the transmission with bidirectional input and one-way output (13) is driven through being input the first driving rotary direction and the second driving rotary direction, which are different rotary directions, the speed ratio between the input terminal and the output terminal with constant rotary direction is the same, different, or variable; in which
the main transmission structure and operational features of the transmission with bidirectional input and one-way output (13) are as following:
-- the first rotary direction and the second rotary direction are reverse;
-- if the input terminal is driven by the first rotary direction, the first rotary direction output is produced through the first transmission gear train driving the output terminal;
-- if the input terminal is driven by the second rotary direction, the first rotary direction output is produced through the second transmission gear train driving the output terminal;
-- an one-way transmission is installed between the first gear train and the second gear train to avoid the interference from the second gear train when the first gear train is used to be the first rotary direction input and produces the first rotary direction output;
-- an one-way transmission is installed between the second gear train and the first gear train to avoid the interference from the first gear train when the second gear train is used to be the second rotary direction input and produces the first rotary direction output;
-- load wheel group (15): it is directly driven by the output terminal of the transmission with bidirectional input and one-way output (13), and further drives a vehicle integrated with the load wheel group (15).

2. The bicycle with bidirectional input and one-way output transmission combined with crank hole thereof as claimed in Claim 1, the front transmission (12) is additionally installed between the human input device (11) and the transmission with bidirectional input and one-way output (13), in which:
-- front transmission (12): constituted by one or more of the following transmissions including various rotary transmission functional structures, such as gear type, belt type, or friction-type, with constant speed ratio or variable speed ratio; in which
the front transmission (12) is driven by the human input device (11) and outputs rotary kinetic energy for driving the transmission with bidirectional input and one-way output (13).

3. The bicycle with bidirectional input and one-way output transmission combined with crank hole thereof as claimed in Claim 1, the rear transmission (14) is additionally installed between the transmission with bidirectional input and one-way output (13) and the load wheel group (15), in which:
-- rear transmission (14): constituted by one or more than one kind of the following transmissions including various rotary transmission functional structures, such as gear type, belt type, or friction-type, with constant speed ratio or variable speed ratio, for being driven by the transmission with bidirectional input and one-way output (13), whereas its output terminal is used to drive the load wheel group (15).

4. The bicycle with bidirectional input and one-way output transmission combined with crank hole thereof as claimed in Claim 1, the front transmission (12) is additionally installed between the human input device (11) and the transmission with bidirectional input and one-way output (13), and the rear transmission (14) is additionally installed between the transmission with bidirectional input and one-way output (13) and the load wheel group (15), in which:
-- front transmission (12): constituted by one or more of the following transmissions including various rotary transmission functional structures, such as gear type, belt type, or friction-type, with constant speed ratio or variable speed ratio; in which
the front transmission (12) is driven by the human input device (11) and outputs rotary kinetic energy for driving the transmission with bidirectional input and one-way output (13);
-- rear transmission (14): constituted by one or more than one kind of the following transmissions including various rotary transmission functional structures, such as gear type, belt type, or friction-type, with constant speed ratio or variable speed ratio, for being driven by the transmission with bidirectional input and one-way output (13), whereas its output terminal is used to drive the load wheel group (15).

5. The bicycle with bidirectional input and one-way output transmission combined with crank hole thereof as claimed in Claim 1, in which the transmission with bidirectional input and one-way output (13) is constituted by an epicyclic gear train, and the input shaft and output shaft are coaxially fitting, wherein the main components include:
-- one end of the input shaft (2000) of the transmission with bidirectional input and one-way output (13) is through installed at one outside of the shell of the gear train (500) in concave structure via a bearing structure, then via two concave inner shells of the concave structure, and from the other end of the input shaft (2000) to perforate through the output shaft (3000) via the one-way transmission (302), and a bearing is installed between the output shaft (3000) and the other outside of the shell of gear train (500);
-- shell of gear train (500): related to a concave structure, which is installed to constitute the mechanical part of the gear train with bidirectional input and one-way output, and through the cyclic fix screw structure with hole step (609) to be locked in the helix structure within crank hole (608) of the crank hole (601), which is embedded in the indentation space of the concave structure;
machine body (600): a relatively static mechanism structure;
- input shaft (2000) is integrated at the inner bevel wheel (402);
-- an epicyclic gear (403) is installed between the outer bevel wheel (404) and the inner bevel wheel (402); the center of the epicyclic gear 403 rotates at an epicyclic gear shaft (401); one end of the epicyclic gear shaft (401) is integrated at an epicyclic gear support arm frame (400), and the epicyclic gear support arm frame (400) is fixed at the shell of gear train (500);
-- the shell of gear train (500) is by means of the cyclic fix screw structure with hole step (609) installed within the helix structure within crank hole (608) of the crank hole (601) of the machine body (600);
-- the one-way transmission (301) is installed between the outer bevel wheel (404) and the output shaft (3000);
-- the inner bevel wheel (402), the epicyclic gear (403), and the outer bevel wheel (404) are constituted by gears or friction wheels;
-- the relation of the transmission ratio for the inner bevel wheel (402) to drive the epicyclic gear (403) is acceleration, deceleration, or constant velocity;
-- the relation of the transmission ratio for the epicyclic gear (403) to drive the outer bevel wheel (404) is acceleration, deceleration, or constant velocity;
-- by way of the above structure, the input shaft (2000) is driven at the first rotary direction, and is through the one-way transmission (302) for driving the output shaft (3000) to produce the first rotary direction output, therefore to constitute the first transmission gear train;
-- by way of the above structure, the input shaft (2000) is driven at the second rotary direction, through the inner bevel wheel (402) for further driving the epicyclic gear (403) and the outer bevel wheel (404), and through the outer bevel wheel (404) and the one-way transmission (301) for driving the output shaft (3000) to produce the first rotary direction output, therefore to constitute the second transmission gear train.

6. The bicycle with bidirectional input and one-way output transmission combined with crank hole thereof as claimed in Claim 1, in which the transmission with bidirectional input and one-way output (13) is integrated and constituted by a transmission with different transmission rotary directions, and the input shaft and output shaft are coaxially fitting, wherein the main components include:
-- one end of the input shaft (2000) of the transmission with bidirectional input and one-way output (13) is through installed at one outside of the shell of the gear train (500) in concave structure via a bearing structure, then via two concave inner shells of the concave structure, and from the other end of the input shaft (2000) to perforate through the output shaft (3000) via the one-way transmission (301), and a bearing is installed between the output shaft (3000) and the other outside of the shell of gear train (500);
-- shell of gear train (500): related to a concave structure, which is installed to constitute the mechanical part of the gear train with bidirectional input and one-way output, and through the cyclic fix screw structure with hole step (609) to be locked in the helix structure within crank hole (608) of the crank hole (601), which is embedded in the indentation space of the concave structure;
-- machine body (600): a relatively static mechanism structure;
-- the other end of the input shaft (2000) is integrated with the driving wheel (602);
-- the driving wheel (602) and the driving wheel (603) rotates in different directions, the driving wheel (603) is via the one-way transmission (305) and then is common with the driving wheel (606) integrated at the revolving shaft (604), and a bearing is installed between the revolving shaft (604) and the shell of gear train (500);
-- the driving wheel (606) and the driving wheel (605) are by means of the pulley or sprocket, driven by the driving belt (607), to constitute a driving wheel set with the same rotary direction;
-- the driving wheel (605) is integrated with the output shaft (3000);
-- the shell of gear train (500) is by means of the cyclic fix screw structure with hole step (609) installed within the helix structure within the crank hole (608) of the crank hole (601) of the machine body (600);
-- the driving wheels (602), (603) are constituted by gears, or friction wheels;
-- the relation of the transmission ratio in the driving wheel set with different rotary directions is acceleration, deceleration, or constant velocity;
-- the relation of the transmission ratio in the driving wheel set with same rotary direction is acceleration, deceleration, or constant velocity;
-- the driving wheel set with same rotary direction is constituted by the pulley with driving belt, toothed belt or steel belt, or the sprocket with chain;
-- by way of the above structure, the input shaft (2000) is driven at the first rotary direction, and is through the one-way transmission (301) for driving the output shaft (3000) to produce the first rotary direction output, therefore to constitute the first transmission gear train;
-- by way of the above structure, the input shaft (2000) is driven at the second rotary direction to drive the driving wheel (602), then the driving wheel (602) drives the driving wheel (603), then the driving wheel (603) drives the driving wheel (604) via the one-way transmission (305) to drive the driving wheel (606), and then the driving wheel (606) drives the driving wheel (605) for driving the output shaft (3000) to produce the first rotary direction output, therefore to constitute the second transmission gear train.

7. The bicycle with bidirectional input and one-way output transmission combined with crank hole thereof as claimed in Claim 1, in which the transmission with bidirectional input and one-way output (13) is integrated and constituted by a transmission with different transmission rotary directions, and the input shaft and output shaft are coaxially fitting, wherein the main components include:
-- one end of the input shaft (2000) of the transmission with bidirectional input and one-way output (13) is through installed at one outside of the shell of gear train (500) in concave structure via a bearing structure, then via two concave inner shells of the concave structure, and from the other end of the input shaft (2000) to perforate through the output shaft (3000) via the one-way transmission (301), and a bearing is installed between the output shaft (3000) and the other outside of the shell of gear train (500);
-- shell of gear train (500): related to a concave structure, which is installed to constitute the mechanical part of the gear train with bidirectional input and one-way output, and through the cyclic fix screw structure with hole step (609) to be locked in the helix structure within crank hole (608) of the crank hole (601), which is embedded in the indentation space of the concave structure;
-- machine body (600): a relatively static mechanism structure;
--the input shaft (2000) is integrated with the driving wheel (602);
-- the driving wheel (602) and the driving wheel (603) rotates in different directions, the driving wheel (603) is via the one-way transmission (305) and then is common with the driving wheel (616) integrated at the revolving shaft (604), and a bearing is installed between the revolving shaft (604) and the shell of gear train (500);
-- the driving wheel (616) drives the driving wheel (615) via the driving wheel (617) rotating at the revolving shaft (618) to constitute a driving wheel set with same rotary direction;
-- the revolving shaft (618) is integrated at the shell of gear train (500);
-- the driving wheel (615) is integrated with the output shaft (3000);
-- the shell of gear train (500) is by means of the cyclic fix screw structure with hole step (609) installed within the helix structure within crank hole (608) of the crank hole (601) of the machine body (600);
-- the driving wheels (602), (603), (615), (616), and (617) are constituted by gears, or friction wheels
-- the relation of the transmission ratio in the driving wheel set with different rotary directions is acceleration, deceleration, or constant velocity;
-- the relation of the transmission ratio in the driving wheel set with same rotary direction is acceleration, deceleration, or constant velocity;
-- the driving wheel set with same rotary direction is constituted by the gear set containing the idle gear or by the internal gear set;
-- by way of the above structure, the input shaft (2000) is driven at the first rotary direction, and is through the one-way transmission (301) for driving the output shaft (3000) to produce the first rotary direction output, therefore to constitute the first transmission gear train;
-- by way of the above structure, the input shaft (2000) is driven at the second rotary direction to drive the driving wheel (602), then the driving wheel (602) drives the driving wheel (603), then the driving wheel (603) drives the driving wheel (604) via the one-way transmission (305) to drive the driving wheel (616), then the driving wheel (616) via the driving wheel (617) drives the driving wheel (615), and then the driving wheel (615) drives the output shaft (3000) to produce the first rotary direction output to constitute the second transmission gear train.

8. The bicycle with bidirectional input and one-way output transmission combined with crank hole thereof as claimed in Claim 1, in which the transmission with bidirectional input and one-way output (13) is integrated and constituted by a transmission with different rotary directions, and the input shaft and output shaft are installed in different axis, wherein the main components include:
-- one end of the input shaft (2000) of the transmission with bidirectional input and one-way output (13) is through installed at one outside of the shell of gear train (500) in concave structure via a bearing structure, then via two concave inner shells of the concave structure, and from the other end of the input shaft (2000) to perforate through the driving wheel (605) via the one-way transmission (301), a bearing is installed between the other end of the input shaft (2000) and the other outside of the shell of gear train (500), and the rotary power source is inputted through one or two ends of the input shaft (2000);
-- shell of gear train (500): related to a concave structure, which is installed to constitute the mechanical part of the gear train with bidirectional input and one-way output, and through the cyclic fix screw structure with hole step (609) to be locked in the helix structure within crank hole (608) of the crank hole (601), which is embedded in the indentation space of the concave structure;
-- machine body (600): a relatively static mechanism structure;
--the input shaft (2000) is integrated with the driving wheel (602);
-- the driving wheel (602) and the driving wheel (603) rotates in different directions, the driving wheel (603) is via the one-way transmission (305) to integrate at the output shaft (3000), the driving wheel (606) is integrated at the output shaft (3000), and a bearing is installed between the output shaft (3000) and the shell of gear train (500);
-- the driving wheel (605) and the driving wheel (606) are by means of the pulley or sprocket, driven by the driving belt (607), to constitute a driving wheel group with same rotary direction;
-- the driving wheel (606) is integrated with the output shaft (3000);
-- the shell of gear train (500) is by means of the cyclic fix screw structure with hole step (609) installed within the helix structure within crank hole (608) of the crank hole (601) of the machine body (600);
-- the driving wheels (602), (603) are constituted by gears, or friction wheels;
-- the relation of the transmission ratio in the driving wheel set with different rotary directions is acceleration, deceleration, or constant velocity;
-- the relation of the transmission ratio in the driving wheel set with same rotary direction is acceleration, deceleration, or constant velocity;
-- the driving wheel set with same rotary direction is constituted by the pulley with driving belt, toothed belt or steel belt, or by the sprocket with chain;
-- by way of the above structure, the input shaft (2000) is driven at the first rotary direction, and is through the one-way transmission (301) for driving the driving wheel (605), through the driving wheel (607) for driving the driving wheel (606) to further drive the output shaft (3000) to produce the first rotary direction output, therefore to constitute the first transmission gear train;
-- by way of the above structure, the input shaft (2000) is driven at the second rotary direction to drive the driving wheel (602), then the driving wheel (602) drives the driving wheel (603), and then via the one-way transmission (305) for driving the output shaft (3000) to produce the first rotary direction output, therefore to constitute the second transmission gear train; and
-- one or two ends of the output shaft (3000) are arranged to output.

9. The bicycle with bidirectional input and one-way output transmission combined with crank hole thereof as claimed in Claim 1, in which the transmission with bidirectional input and one-way output (13) is integrated and constituted by a transmission with different rotary direction, and the input shaft and output shaft are installed in different axis, wherein the main components include:
-- one end of the input shaft (2000) of the transmission with bidirectional input and one-way output (13) is through installed at one outside of the shell of gear train (500) in concave structure via a bearing structure, then via two concave inner shells of the concave structure, and from the other end of the input shaft (2000) to perforate through the driving wheel (615) via the one-way transmission (301), a bearing is installed between the other end of the input shaft (2000) and the other outside of the shell of gear train (500), and the rotary power source is inputted through one or two ends of the input shaft (2000);
-- shell of gear train (500): related to a concave structure, which is installed to constitute the mechanical part of the gear train with bidirectional input and one-way output, and through the cyclic fix screw structure with hole step (609) to be locked in the helix structure within crank hole (608) of the crank hole (601), which is embedded in the indentation space of the concave structure;
-- machine body (600): a relatively static mechanism structure;
-- the input shaft (2000) is integrated with the driving wheel (602);
-- the driving wheel (615) drives the driving wheel (616) via the driving wheel (617), the driving wheel (616) is integrated with the output shaft (3000), and a bearing is installed between the output shaft (3000) and the shell of gear train (500);
-- the driving wheel (617) rotates at the revolving shaft (618), and the revolving shaft (618) is installed at the shell of gear train (500);
-- the driving wheel (602) and the driving wheel (603) rotate in different directions;
- the driving wheel (603) is integrated with the output shaft (3000) through the one-way transmission (305);
-- the shell of gear train (500) is by means of the cyclic fix screw structure with hole step (609) installed within the helix structure within crank hole (608) of the crank hole (601) of the machine body (600);
-- the driving wheels (602), (603), (615), (616), and (617) are constituted by gears, or friction wheels;
-- the relation of the transmission ratio in the driving wheel set with different rotary direction is acceleration, deceleration, or constant velocity;
-- the relation of the transmission ratio in the driving wheel set with same rotary direction is acceleration, deceleration, or constant velocity;
-- the driving wheel set with same rotary direction is constituted by the gear set containing the idle gear or by the internal gear set;
-- by way of the above structure, the input shaft (2000) is driven at the first rotary direction, and is through the one-way transmission (301) for driving the driving wheel (615), then through the driving wheel (617) for driving the driving wheel (616) and for further driving the output shaft (3000) to produce the first rotary direction output, therefore to constitute the first transmission gear train;
-- by way of the above structure, the input shaft (2000) is driven at the second rotary direction to drive the driving wheel (602), then the driving wheel (602) drives the driving wheel (603), then the driving wheel (603) through the one-way transmission (305) drives the output shaft (3000) to produce the first rotary direction output, therefore to constitute the second transmission gear train; and
-- one or two ends of the output shaft (3000) are arranged to output.

10. The bicycle with bidirectional input and one-way output transmission combined with crank hole thereof as claimed in Claim I, in which the transmission with bidirectional input and one-way output (13) includes being consisted of a bidirectional input one-way output inner rocker arm epicyclic gear set, which is by means of an inner rocker arm epicyclic gear set to combine with the one-way transmission to enable the inner rocker arm epicyclic gear set to constitute the bidirectional input one-way output transmission function, and it mainly consists of:
-- Inner rocker arm epicyclic gear set: consisted of an inner bevel wheel (402), an outer bevel wheel (404) and at least one epicyclic gear (403), and including the bevel gears thereof meshing with each other to form the epicyclic gear set function, or the bevel friction wheel thereof meshing with each other to generate friction transmission to form the epicyclic gear set function, and equipped with a shell (500) to combine with the machine body (600), as well as equipped with the shaft and shaft bearing;
The speed ratios of the inner bevel wheel (402) and the outer bevel wheel (404) of above mentioned epicyclic gear set are the same, and the speed ratios of the two respectively with the epicyclic gear (403) are same or different;
The speed ratios of the inner bevel wheel (402) and the outer bevel wheel (404) of above mentioned epicyclic gear set are different, whereas the speed ratios of the epicyclic gear (403) and the outer bevel wheel (404) are the same or different, and the speed ratios of the epicyclic gear (403) and the inner bevel wheel (402) are same or different;
-- One end of the input shaft (2000) is via the shaft bearing (101) structure penetratingly installed to one side of the shell of the gear train (500), whereas the other end of the input shaft (2000) is via the one-way transmission (302) and the shaft bearing (102) to penetrate the inside of the cylindrical output shaft (3000); a shaft bearing (103) is installed between the cylindrical output shaft (3000) and the shell of gear train (500);
-- Shell of gear train (500): installed to constitute the mechanical part of the bidirectional input one-way output inner rocker arm epicyclic gear set, which is fixed to the machine body (600);
-- Machine body (600): a relatively static mechanism structure;
-- Inner bevel wheel (402) is fixed to the shell (500);
-- An epicyclic gear (403) is installed between the outer bevel wheel (404) and the inner bevel wheel (402); the center of the epicyclic gear (403) rotates on the epicyclic gear shaft (401) through the shaft bearing (104); the epicyclic gear shaft (401) combines to the epicyclic gear support arm frame (400); a one-way transmission (303) is installed between the epicyclic gear support arm frame (400) and the input shaft (2000);
-- The outer bevel wheel (404) is annularly installed to the cylindrical output shaft (3000);
For the above mentioned the bidirectional input one-way output inner rocker arm epicyclic gear set constituting the transmission with bidirectional input and one-way output (13), the operational functions are describes as follow:
-- When the human input device (11) uses the first rotary direction to drive the input shaft (2000), the one-way transmission (302) drives the cylindrical output shaft (3000) to perform first rotary output to form the first transmission gear; in the meantime, the input shaft (2000) through the one-way transmission (303) and the epicyclic gear support arm frame (400) is at an idling status;
-- When the human input device (11) uses the second rotary direction to drive the input shaft (2000), the one-way transmission (303) and the epicyclic gear support arm frame (400) drive the epicyclic gear (403) and the outer bevel wheel (404) to drive the cylindrical output shaft (3000) to perform the same output of the first rotary direction to form the second transmission gear; in the meantime, the one-way transmission (302) between the input shaft (2000) and the cylindrical output shaft (3000) is at an idling status;
The operational characteristics are as follow:
-- The first and second rotary directions are opposite rotary directions;
-- When using first rotary direction to drive the input end, the first transmission gear drives the output end to perform first rotary direction output;
-- When using second rotary direction to drive the input end, the second transmission gear drives the output end to perform first rotary direction output;
-- A one-way transmission is installed between the first transmission gear train and the second transmission gear train, so as to avoid the interference from the second transmission gear train when the first transmission gear train is inputted in the first rotary direction and outputs in the first rotary direction;
-- A one-way transmission is installed between the second transmission gear train and the first transmission gear train, so as to avoid the interference from the first transmission gear train when the second transmission gear train is inputted in the second rotary direction and outputs in the first rotary direction.

11. The bicycle with bidirectional input and one-way output transmission combined with crank hole thereof as claimed in Claims 5, 6, 7, 8, 9 or 10, in which the installed position of the one-way transmission in the transmission with bidirectional input and one-way output (13) is selected under the same operational function of one-way input and bidirectional output.

12. A bicycle with bidirectional input and one-way output transmission combined with crank hole thereof, in which the combining methods of the transmission with bidirectional input and one-way output (13) and the crank hole (601) of the bicycle, except for the cyclic fix screw structure with hole step (609) and the helix structure within crank hole (608) locked in the crank hole (601), further includes fastening through latch structure, and/or combining through key and keyway structure, and/or combining through pin and pin hole, and/or screwing through helical structure, and/or clamping or welding through clamping structure, to install the transmission with bidirectional input and one-way output (13) at the crank hole (601).
